# EUROPÄISCHE PATENTSCHRIFT

(11) **EP 1 320 478 B1**
(45) Veröffentlichungstag und Bekanntmachung des Hinweises auf die Patenterteilung: **30.06.2004**
(21) Anmeldenummer: 01982140.4
(22) Anmeldetag: 26.09.2001
(51) Int. Cl.: B61C 9/38, B60K 7/00

(54) **DIREKTANTRIEB EINES RADSATZES**
DIRECT DRIVE FOR A WHEEL SET
ENTRAINEMENT DIRECT D'UN ESSIEU MONTE

(30) Priorität: 27.09.2000 DE 10047911
(43) Veröffentlichungstag der Anmeldung: 25.06.2003
(73) Patentinhaber: SIEMENS AKTIENGESELLSCHAFT, 80333 München (DE); Jöckel, Andreas, 90408 Nürnberg (DE)
(72) Erfinder: HOFFMANN, Thilo, A-8020 Graz (AT); TEICHMANN, Martin, 8045 Graz (AT)
(86) Internationale Anmeldenummer: PCT/DE2001/003685
(87) Internationale Veröffentlichungsnummer: WO 2002/026541

(56) Entgegenhaltungen:
- FR-A- 2 257 477
- FR-A- 2 281 850
- US-A- 1 783 269
- PATENT ABSTRACTS OF JAPAN vol. 017, no. 288 (M-1423), 3. Juni 1993 (1993-06-03) & JP 05 016800 A (RAILWAY TECHNICAL RES INST), 26. Januar 1993 (1993-01-26)

## Beschreibung

Die Erfindung betrifft einen Antrieb eines Radsatzes eines Fahrwerks.

Aus der EP 0 413 337 A1 ist ein elektromotorischer Schienenfahrzeugdirektantrieb bekannt, der axial neben dem anzutreibenden Rad einen elektronisch kommutierten Elektromotor aufweist, dessen Rotor zur Drehmomentübertragung an das anzutreibende Rad angeschlossen ist, wobei die Rotationsachsen des Rotors und des anzutreibenden Rades im wesentlichen miteinander fluchten. Außerdem ist der Rotor dort als Außenrotor des gehäuselosen Elektromotors ausgebildet und weist ringförmig verteilte Dauermagnete auf. Des Weiteren ist der Stator dieses Elektromotors an der dem anzutreibenden Rad abgewandten Seite drehfest an dem Fahrzeug gehalten.

Nachteilig dabei ist, dass dieser Antrieb aufgrund seiner Anordnung und Bauform für Schienenfahrzeuge mit herkömmlichen Radsätzen, die außen oder innen gelagert sind, kaum anwendbar ist. Bei dem anzutreibenden Radsatz muss der Antrieb nach innen zwischen die beiden Räder verlagert werden, wobei die scheibenähnliche Ausführung dieses Direktantriebs nur unter erhöhtem konstruktiven Aufwand in dem zur Verfügung stehenden Bauraum zwischen den beiden Rädern unterzubringen ist. Für den Antrieb eines Radsatzes mit durchgehender Welle ist somit dieser Antrieb nicht einsetzbar.

Aus der FR 2 281 580 A ist ein Außenläufermotor nach dem Asynchronprinzip für den Antrieb einer elektrischen Bahn beschrieben.

Des Weiteren ist aus der US 1 783 269 A der Antrieb einer elektrischen Bahn beschrieben, die von einer vierpoligen Gleichstrommaschine angetrieben wird.

Der Erfindung liegt demnach die Aufgabe zugrunde, einen Antrieb eines Radsatzes eines Fahrwerks zu schaffen, der gegenüber herkömmlichen Antriebssystemen einen geringeren Wartungsaufwand und geringere Herstellkosten verursacht. Außerdem soll dieses Antriebskonzept einen geringeren Energieverbrauch aufweisen und geringere Lärmemissionen verursachen. Eine weitere Aufgabe der Erfindung ist es, dieses Antriebs system so auszubilden, dass es auch bei Niederflurschienenfahrzeugen einzusetzen ist.

Die Lösung der gestellten Aufgabe gelingt durch den Antrieb eines Radsatzes eines Fahrwerks gemäß Anspruch 1.

Unter dem Begriff Fahrwerke sind u.a. Drehgestelle und Einzelachsen zu verstehen.

Damit entfällt sowohl das Getriebe, als auch eine elastische Kupplung zwischen Motor und Radsatz. Ein weiterer Vorteil dieses erfindungsgemäßen Antriebskonzepts ist das reduzierte Einbauvolumen und das gegenüber herkömmlichen Antrieben geringe Gewicht der gesamten Antriebsanordnung.

In der erfindungsgemäßen Ausgestaltung ist zumindest abschnittsweise die Welle des Radsatzes als Läufer ausgebildet. Damit übernimmt die Welle sowohl elektromagnetische als auch konstruktive Funktionen. Sie wirkt einerseits als Läufer des Innenläufermotors und stellt außerdem als Welle die mechanische Verbindung der beiden Räder des Radsatzes her. Damit wird eine weitere Reduktion der Herstellkosten der Antriebs erreicht. Vorteilhafterweise ist dabei die Welle als Stahlhohlwelle ausgebildet, die zu einer weiteren Reduktion des Gewichts der gesamten Antriebsanordnung führt.

Erfindungsgemäß befinden sich auf der Welle Permanentmagnete, die mit dem Ständer des Innenläufermotors elektromagnetisch wechselwirken, um somit den Radsatz anzutreiben. Besonders vorteilhaft ist es dabei, wenn die Permanentmagnete direkt auf die Stahlhohlwelle geklebt sind. Die Verluste im Läufer sind sehr gering, so dass das Joch des Läufers nicht notwendigerweise geblecht auszuführen ist.

In einer weiteren Ausführungsform ist der Antrieb als permanenterregter Synchronmotor ausgebildet, Um den Synchronmotor mit einer erhöhten Drehmomentdichte auszustatten, ist eine hohe Polzahl von insbesondere größer gleich 16 Polen vorteilhaft. Diese Polzahl, die sich aufgrund der geringen Jochhöhe bei dem durch den vorgegebenen Bauraum gegebenen Außendurchmesser ergibt, führt zu einem möglichst großen Luftspaltdurchmesser. Aus diesem Grund ist dieser Antrieb aufgrund dieses Synchronmotors auch für die in zunehmendem Maße kleinen Raddurchmesser geeignet, die eine Komfortsteigerung durch niedere Fußbodenhöhen im Eingangsbereich und Türbereich von Schienenfahrzeugen ermöglichen.

Die hohe Polzahl führt auch zu sehr kurzen Wickelköpfen, was den Wirkungsgrad des Synchronmotors steigert und es dabei ermöglicht, bei vorgegebener Einbaulänge des Antriebs die Blechpaketlänge zu erhöhen. Dadurch lässt sich die Synchronmaschine dem vorhandenen insbesondere röhrenähnlichen Einbauvolumen vor allem auch bei kleinen Rädern vorzüglich anpassen.

Da die Verluste der Synchronmaschine im wesentlichen im ruhenden Teil, im vorliegenden Fall im Ständer auftreten, sind diese aus diesem Bereich der Synchronmaschine abzuführen. Dabei eignen sich die an sich bekannten Eigen- und Fremdbelüftungsarten. In einer weiteren Ausgestaltung dieser Erfindung weist der Ständer, insbesondere um Geräuschemissionen der Lüfter zu vermeiden, Flüssigkeitskühlung auf. Die zur Flüssigkeitskühlung notwendigen Kühlkanäle sind vor allem bei einem mehreckigen Querschnitt des Gehäuses des Ständers in den Ecken angeordnet. Dabei sind dort im wesentlichen axiale Kühlkanäle vorgesehen, die parallel zur Welle des Radsatzes verlaufen. Insbesondere bei einem viereckigen Querschnitt des Gehäuses des Ständers reduziert sich der Blechpaketaußendurchmesser nicht durch die Anordnung dieser axialen Kühlkanäle. Durch die nahezu vollständige Kapselung der Synchronmaschine durch ein Gehäuse mit Flüssigkeitskühlung insbesondere Wasserkühlung und der niederen Drehzahl sowie des damit verbundenen Entfalls eines Luftkühlers werden sehr niedrige Geräuschemissionen erreicht. Da Drehzahl und Wellendurchmesser von Radsatz und Antrieb gleich sind, können insbesondere bei einer Innenlagerung des Radsatzes die Lager von Innenläufermotor und Radsatz kombiniert werden. Dadurch reduziert sich die Anzahl der notwendigen Lager, wie bei einem nicht angetriebenen Radsatz auf zwei Wälzlager. Dies reduziert die Herstellkosten des Antriebs und auch dessen Wartungsaufwand. Insbesondere entfällt die Nachschmierung. Bei den neuen Lagertechnologien weisen die Radsatzlager mittlerweile längere Standzeiten auf als die Radscheiben, so dass eine früher sinnvolle Außenlagerung der Radsätze hinfällig wird.

Da der Synchronmotor auf der Welle des Radsatzes gelagert ist, ist eine aufwendige Fahrmotoraufhängung im Fahrwerk nicht mehr erforderlich. Es bedarf vielmehr nur noch einer Drehmomentstütze zwischen Antrieb und dem Fahrzeug. Die damit verbundene Erhöhung der ungefederten Massen durch diesen erfindungsgemäßen Antrieb spielt weder für die Oberbaubelastung noch für die Fahrdynamik eine Rolle. Insbesondere ist die Erhöhung der ungefederten Massen in einem Geschwindigkeitsbereich bis 160 km/h völlig vernachlässigbar.

Vor allem in dem Geschwindigkeitsbereich darüber ist es vorteilhaft, wenn die Massen des Antriebs, zumindest teilweise, vom Radsatz durch geeignete Mittel z.B. Elastomeren entkoppelt sind.

Dabei sind zwischen Läufer und Welle des Radsatzes z.B. Gummielemente angeordnet.

Ebenso ist es möglich zwischen Läufer und Ständer, z.B. im Bereich des Luftspalts, eine derartige Kopplung vorzusehen.

Vorteilhafterweise weist diese Drehmomentstütze zumindest eine zwischen den Rädern eines Radsatzes mittig angeordnete Zugdruckstange auf. Damit werden u.a. die Zugkräfte des Antriebs direkt auf das Fahrzeug übertragen. Dies führt zu einer Reduktion der Nickmomente des Fahrwerks. Es vermeidet außerdem eine Radsatzentlastung bei Zugkraftausübung, da das Fahrwerk keinerlei Reaktionsmomente und Kräfte des Antriebs mehr erfährt. Es findet außerdem keine Übertragung von dynamischen Reaktionsmomenten ins Fahrwerk statt, was die Körperschallübertragung reduziert.

Eine mittig angeordnete Zugdruckstange als einfache Drehmomentstütze ist insbesondere bei einer harten Längsführung des Radsatzes vorteilhaft, da dort die Zugkraft ohnehin über äußere Lenker übertragen wird.

Bei einer weichen Längsführung des Radsatzes ist es vorteilhaft eine doppelte Zug-Druck-Stange vorzusehen.

Außerdem sind bei Konstruktion der Bauteile des Fahrwerks nicht mehr die Antriebs- und Bremsmomente bzw. die Antriebsund Bremskräfte ausschlaggebend, sondern es braucht nach Kräften der Fahrdynamik dimensioniert zu werden.

Durch diesen Antrieb der vorzugsweise für Schienenfahrzeuge mit Radsätzen anwendbar ist, wird ein wirtschaftliches Antriebskonzept für einen Direktantrieb für Schienenfahrzeuge vorgestellt, der auch für kleine Räder mit Durchmessern von ca. 620 mm geeignet ist. Dabei spielen die grundsätzlichen Vorteile, wie geringerer Energieverbrauch, geringere Wartungsaufwand, reduzierte Herstellkosten, geringere Geräuschemissionen und Vermeidung von Ölverlusten des Getriebes eine wesentliche Rolle.

Durch die Innenlagerung von Radsatz und Innenläufermotor ist eine Schallschutzvorrichtung am Fahrwerk wesentlich leichter zu realisieren.

Die Erfindung sowie weitere vorteilhafte Ausgestaltungen der Erfindung gemäß Merkmale der Unteransprüche werden im folgenden anhand schematisch dargestellter Ausführungsbeispiele in der Zeichnung näher erläutert. Darin zeigen:
- FIG 1: eine Seitenansicht eines prinzipiell dargestellten Antriebs eines Radsatzes,
- FIG 2: einen Längsschnitt dieses Radsatzes,
- FIG 3: einen Querschnitt dieses Antriebs des Radsatzes.

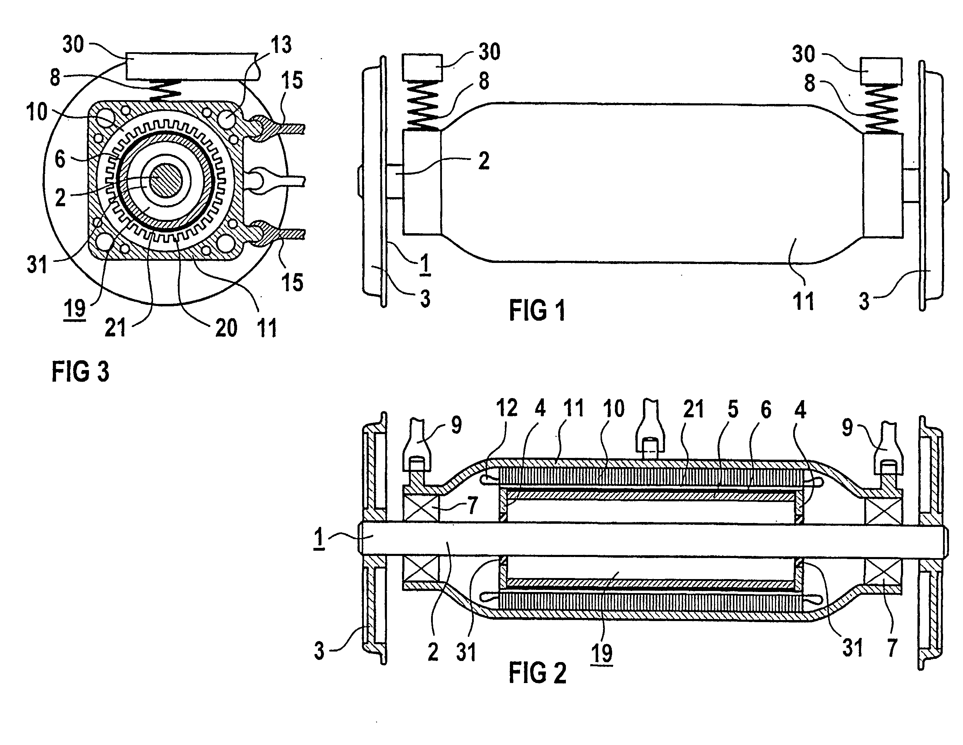

Ein Radsatz 1 eines nicht näher dargestellten Fahrwerks nach FIG 1 zeigt eine Radsatzwelle 2 und die an dieser Radsatzwelle 2 befestigten Rädern 3. Die Räder 3 sind auf der Radsatzwelle 2 befestigt, insbesondere aufgeschrumpft. Auf der Radsatzwelle 2 befindet sich nach FIG 2 ein Läufer 19 eines als Innenläufermotor ausgebildeten Elektromotors, der insbesondere als Synchronmotor ausgeführt ist. Der Läufer 19 ist im wesentlichen rohrförmig ausgebildet und befindet sich zwischen zwei Stahlscheiben 4 auf der Radsatzwelle 2. Dabei ist der rohrförmig ausgebildete Läufer 19 vorzugsweise als Stahlhohlwelle 5 ausgebildet, die Permanentmagnete 6 an der Oberfläche aufweist. Vorteilhafterweise ist die Stahlhohlwelle 5 über Gummielemente 31 mit der Radsatzwelle 2 gekoppelt. Ständer 10 und Läufer 19, der sich auf der Radsatzwelle 2 befindet, stehen über Wälzlager 7 mechanisch in Verbindung. Diese Wälzlager 7 beinhalten sowohl die Funktion Radsatzlager als auch die Funktion Fahrmotorlager, so dass nur zwei Wälzlager 7 pro Radsatz 1 vorzusehen sind. Auf das Gehäuse 11 des Ständers 10 bzw. des Lagers der Wälzlager 7 stützen sich in vertikaler Richtung die nicht näher dargestellten Fahrwerklängsträger über eine Primärfederung 8 ab. In Längsrichtung und für Bewegungen um seine Hochachse wird der Antrieb des Radsatzes 1 über elastische Lenker 9 von den Fahrwerklängsträgern geführt. Der Ständers 10 des als Synchronmaschine ausgeführten Antriebs weist ein Blechpaket, ein Gehäuse 11 als auch durch die in Nuten 20 des Ständers 10 befindliche Wicklungen auf, die auf der jeweiligen Stirnseite des Blechpakets Wickelköpfe 12 formen. Durch elektromagnetische Wechselwirkung des Ständers 10 mit seinen Läufer 19 und dessen starre Verbindung mit der Radsatzwelle 2 dreht sich die Radsatzwelle 2 und damit die an den jeweiligen Enden der Radsatzwelle 2 befindlichen Räder 3.

FIG 3 zeigt im Querschnitt eines erfindungsgemäß ausgeführten Direktantriebs eines Radsatzes 1 die Primärfederung 8 an den Fahrwerklängsträgern 30, das im wesentlichen quadratisch ausgeführte Gehäuse 11 des Ständers 10 an dem seitlich eine Doppelzugstange 15 angebracht ist, die das Drehmoment aufnimmt und damit gleichzeitig den Längszugriff mittig abnimmt und direkt in den Wagenkasten überträgt. Das Gehäuse 11 des Ständers 10 zeigt Kühlkanäle 13, die insbesondere von Flüssigkeit durchströmt werden und so zu einer effizienten Kühlung des Ständers 10 beitragen.

Das Blechpaket des Ständers 10 zeigt die allgemein übliche Nut-Zahn-Geometrien. Es kann insbesondere auch das Blechpaket, mit axialen Kühlkanälen versehen sein, durch die vorzugsweise Luft hindurchströmt. Der Läufer 19 eines derartigen erfindungsgemäßen Direktantriebs ist direkt auf der bzw. um die Radsatzwelle 2 positioniert, wobei auf der dem Luftspalt 21 zugewandten Seite des Läufers 19 Permanentmagnete 6 angeordnet sind. Die Permanentmagnete 6 können dabei als kreissegmentähnliche Gebilde am Läufer 19 und insbesondere der Stahlhohlwelle 5 angeordnet sein, wobei die Krümmung dieser Kreissegmente im wesentlichen der Krümmung des Läufers 19 entspricht. Der Läufer 19 ist somit wie ein rotationssymmetrischer Vollpol-Läufer aufgebaut. Es sind ebenso andere Anordnungen von Permanentmagneten 6 möglich, wie z.B. kreissekanten- oder v-förmig. Ebenso können durch geeignete Maßnahmen z.B. einer Bandage die Permanentmagnete 6 insbesondere bei hohen Drehzahlen der Bahnantriebe am Läufer 19 fixiert werden.

Der erfindungsgemäße Direktantrieb eines Radsatzes 1 ermöglicht einen denkbar einfachen Antrieb. Gegenüber den bisher verwendeten Antrieben sind weder Getriebekupplungen noch unnötige Wälzlager 7 vorzusehen, da nur noch zwei fettgeschmierte integrierte Wälzlager 7 für den Betrieb notwendig sind. Das führt zu einer deutlichen Reduzierung des Wartungsaufwandes. Der erfindungsgemäße Radsatzdirektantrieb führt zu geringeren Energiekosten und weist einen höheren Antriebswirkungsgrad auf. Durch die mehrfach erwähnte Eignung für kleine Raddurchmesser ist dieser Direktantrieb auch vorteilhafterweise für niederflurige Fahrwerke und Wagenkästen geeignet.

## Patentansprüche

1. Direktantrieb eines Radsatzes (1) eines Fahrwerks, der zwei auf einer Radsatzwelle (2) befindliche Räder (3) aufweist, die durch zumindest einen die Radsatzwelle (2) umfassenden Innenläufermotor antreibbar sind, der einen Ständer (10) und einen Läufer (19) aufweist, **dadurch gekennzeichnet, dass** die Radsatzwelle (2) in dem als Läufer (19) ausgebildeten Teil Permanentmagnete (6) aufweist, die mit dem Ständer (10) des Innenläufermotors elektromagnetisch wechselwirken, um den Radsatz (1) anzutreiben.

2. Antrieb nach Anspruch 1, **dadurch gekennzeichnet, dass** die Radsatzwelle (2) des Radsatzes (1) zumindest abschnittsweise bzgl. ihrer Länge als Läufer (19) ausgebildet ist.

3. Antrieb nach Anspruch 2, **dadurch gekennzeichnet, dass** die Radsatzwelle (2) als Stahlhohlwelle ausgebildet ist.

4. Antrieb nach einem der vorhergehenden Ansprüche, **dadurch gekennzeichnet, dass** die Permanentmagnete (6) auf die Radsatzwelle (2) geklebt sind.

5. Antrieb nach Anspruch 3 oder 4, **dadurch gekennzeichnet, dass** der Antrieb als permanenterregter Synchronmotor ausgebildet ist.

6. Antrieb nach Anspruch 5, **dadurch gekennzeichnet, dass** der Synchronmotor hochpolig ausgeführt ist.

7. Antrieb nach Anspruch 6, **dadurch gekennzeichnet, dass** die Polzahl des Synchronmotors größer oder gleich 16 ist.

8. Antrieb nach einem oder mehreren der vorhergehenden Ansprüche, **dadurch gekennzeichnet, dass** zumindest der Ständer (10) des Innenläufermotors flüssigkeitsgekühlt ist.

9. Antrieb nach Anspruch 8, **dadurch gekennzeichnet, dass** das Gehäuse des Ständers (10) einen mehreckigen Querschnitt aufweist, wobei in den Ecken axiale Kühlkanäle (13) vorgesehen sind.

10. Antrieb nach einem der vorhergehenden Ansprüche, **dadurch gekennzeichnet, dass** zwei Lager (7) vorhanden sind, die sowohl der Lagerung des Radsatzes (1) als auch der des Innenläufermotors dienen.

11. Antrieb nach einem der vorhergehenden Ansprüche, **dadurch gekennzeichnet, dass** zwischen den Rädern (3) eines Radsatzes (1) zumindest eine mittig angeordnete Zug-Druck-Stange vorgesehen ist.

12. Antrieb nach einem oder mehreren der vorhergehenden Ansprüche, **dadurch gekennzeichnet, dass** die Massen des Antriebs, zumindest teilweise, vom Radsatz (1) durch geeignete Mittel entkoppelt sind.

13. Antrieb nach einem oder mehreren der vorhergehenden Ansprüche, **dadurch gekennzeichnet, dass** der Antrieb für Schienenfahrzeuge mit Radsätzen (1) anwendbar ist.

14. Antrieb nach Anspruch 13, **dadurch gekenn-zeichnet, dass** die Schienenfahrzeuge Niederflurdrehgestelle aufweisen.

## Claims

1. Direct drive of a wheel set (1) of a chassis, having two wheels which are disposed on a wheel set shaft (2) and are driven by at least one internal rotor motor which encompasses the wheel set shaft (2) and has a stator (10) and a rotor (19), **characterised in that** the wheel set shaft (2) has in the portion configured as a rotor (19) permanent magnets (6) which electromagnetically interact with the stator (10) of the internal rotor motor in order to propel the wheel set (1).

2. Drive according to Claim 1, **characterised in that** the wheel set shaft (2) of the wheel set (1) has a length configured at least along portions thereof as a rotor (19).

3. Drive according to Claim 2, **characterised in that** the wheel set shaft (2) is configured as a hollow steel shaft.

4. Drive according to one of the preceding claims, **characterised in that** the permanent magnets (6) are bonded onto the wheel set shaft (2).

5. Drive according to Claim 3 or 4, **characterised in that** the drive is configured as a permanently-excited synchronous motor.

6. Drive according to Claim 5, **characterised in that** the synchronous motor is configured with a large number of poles.

7. Drive according to Claim 6, **characterised in that** the number of poles on the synchronous motor is greater than or equal to 16.

8. Drive according to one or more of the preceding claims, **characterised in that** at least the stator (10) of the internal rotor motor is cooled by liquid.

9. Drive according to Claim 8, **characterised in that** the housing of the stator (10) has a polygonal cross-section, with axial cooling ducts (13) provided in the comers.

10. Drive according to one of the preceding claims, **characterised in that** two bearings (7) are provided for support of the wheel set (1) and of the internal rotor motor.

11. Drive according to one of the preceding claims, **characterised in that** at least one central push-pull rod is provided between the wheels (3) of a wheel set (1).

12. Drive according to one or more of the preceding claims, **characterised in that** the masses of the drive, at least partially, are decoupled from the wheel set (1) by suitable means.

13. Drive according to one or more of the preceding claims, **characterised in that** the drive is applicable for railway vehicles with wheel sets (1).

14. Drive according to Claim 13, **characterised in that** the railway vehicles include low-floor bogies.

## Revendications

1. Entraînement direct d'un essieu monté (1) d'un train de roulement, comprenant deux roues (3) qui se trouvent sur un arbre d'essieu (2), et qui peuvent être entraînées par un moteur à rotor intérieur englobant au moins l'arbre d'essieu (2) et comprenant un stator (10) et un rotor (19), **caractérisé en ce que** l'arbre d'essieu (2), dans la partie réalisée en tant que rotor (19), comporte des aimants permanents (6) qui interagissent réciproquement, sur le plan électromagnétique, avec le stator (10) du moteur à rotor intérieur, pour entraîner l'essieu monté (1).

2. Entraînement selon la revendication 1, **caractérisé en ce que** l'arbre d'essieu (2) de l'essieu monté (1), est réalisé en tant que rotor (19), au moins par tronçons relativement à sa longueur.

3. Entraînement selon la revendication 2, **caractérisé en ce que** l'arbre d'essieu (2) est réalisé sous forme d'arbre creux en acier.

4. Entraînement selon l'une des revendications précédentes, **caractérisé en ce que** les aimants permanents (6) sont collés sur l'arbre d'essieu (2).

5. Entraînement selon la revendication 3 ou 4, **caractérisé en ce que** l'entraînement est réalisé sous forme de moteur synchrone à excitation permanente.

6. Entraînement selon la revendication 5, **caractérisé en ce que** le moteur synchrone est d'une configuration à grand nombre de pôles.

7. Entraînement selon la revendication 6, **caractérisé en ce que** le nombre de pôles du moteur synchrone est supérieur ou égal à 16.

8. Entraînement selon l'une ou plusieurs des revendications précédentes, **caractérisé en ce qu'**au moins le stator (10) du moteur à rotor intérieur, est refroidi par liquide.

9. Entraînement selon la revendication 8, **caractérisé en ce que** le carter du stator (10) présente une section transversale polygonale, des canaux de refroidissement (13) d'orientation axiale, étant prévus au niveau des sommets.

10. Entraînement selon l'une des revendications précédentes, **caractérisé en ce que** sont prévus deux paliers (7) qui servent au montage aussi bien de l'essieu monté (1) que du moteur à rotor intérieur.

11. Entraînement selon l'une des revendications précédentes, **caractérisé en ce qu'**entre les roues (3) d'un essieu monté (1) est prévue au moins une tige de traction-compression agencée de manière centrale.

12. Entraînement selon l'une ou plusieurs des revendications précédentes, **caractérisé en ce que** les masses de l'entraînement sont découplées, au moins partiellement, de l'essieu monté (1), par des moyens appropriés.

13. Entraînement selon l'une ou plusieurs des revendications précédentes, **caractérisé en ce que** l'entraînement peut être utilisé pour des véhicules sur rails comprenant des essieux montés (1).

14. Entraînement selon la revendication 13, **caractérisé en ce que** les véhicules sur rails comportent des bogies surbaissés.
